# EUROPEAN PATENT APPLICATION

(11) **EP 2 369 295 A2**
(43) Date of publication of application: **28.09.2011**
(21) Application number: 11154621.4
(22) Date of filing: 16.02.2011
(51) Int. Cl.: G01C 19/56, G01C 25/00, G01P 15/08, G01P 15/18, G01P 21/00

(54) **Apparatus for detecting angular velocity and acceleration**

(30) Priority: 25.03.2010 JP 2010069111
(71) Applicant: Hitachi Automotive Systems, Ltd., Hitachinaka-shi Ibaraki 312-8503 (JP)
(72) Inventor: Nakamura, Toshiaki, Tokyo 100-8220 (JP); Matsumoto, Masahiro, Tokyo 100-8220 (JP); Asano, Satoshi, Tokyo 100-8220 (JP)
(74) Representative: MERH-IP Matias Erny Reichl Hoffmann

(57) **Abstract**

An apparatus for detecting angular velocity and acceleration having diagnosing units (401, 402, 403, 404) for diagnosing the function of detecting angular velocity; diagnosing units (405, 406) for diagnosing the function of detecting acceleration; a diagnosing unit for a DSP or a MPU; multiple ROMs (202, 203) storing the same data; a diagnosing unit for the ROMs (202, 203); a diagnosing unit for a RAM (207); a unit (300) for outputting the outputs of the angular velocity sensor, the acceleration sensor and the results of diagnoses all together in response to an output command from an external device (500); and a unit for sending error detection codes along with the sensor outputs and the result of diagnoses when the sensor outputs and the results of diagnoses are outputted together.

## Description

### BACKGROUND OF THE INVENTION

The present invention relates to an apparatus having the self-diagnosing function and capable of detecting angular velocity and acceleration.

Examples of the function of diagnosing an angular velocity sensor of vibration type are embodied as apparatuses disclosed in the specifications of Japanese Patent Nos. 4311496 and 3991978.

If a sensor for detecting the angular velocity and acceleration of an automobile necessary to secure the driving safety must be placed in the environment such as the engine room where the range of temperature change is wide and the influence by vibrations and electromagnetic noise is considerable, it is vital to make the reliability of the sensor sufficiently high. To meet this requirement, Japanese Patent No. 4311496, discloses the mechanism wherein the angular velocity, the acceleration and the error-diagnosis signal at the same time point are digitally outputted in the time-division manner by an output circuit, and the external device checks whether or not the angular velocity output and the acceleration output to be next outputted are normal, on the basis of the diagnostic outputs of the sensors. Japanese Patent No. 3991978 discloses the mechanism wherein two angular velocity sensors are used, and failure diagnosis regarding the normality or abnormality of the outputs is effectuated by comparing the output of one sensor with the output of the other.

### SUMMARY OF THE INVENTION

This invention has been made in view of the background described above.

According to this invention, there is provided an apparatus for detecting angular velocity and acceleration, having: a unit for diagnosing the function of detecting angular velocity; a unit for diagnosing the function of detecting acceleration; a unit for diagnosing a DSP (or MPU); ROMs for storing the same data; a unit for diagnosing the ROMs; a unit for diagnosing a RAM; a unit for outputting the sensor outputs and the results of diagnoses together in response to the output demand from an external device; and/or a unit for transmitting an error detection code to the external device along with the sensor outputs and the results of diagnoses sent out together to the external device.

By outputting the sensor outputs and the diagnostic results together in response to a single transmission demand from the external device, the time for the transmission of required information can be shortened. Further, by adding the error detection code to the sensor outputs when the sensor outputs are transmitted to the external device, the external device can judge whether the received data is normal or not, so that the reliability of the transmitted data can be secured. Furthermore, since all the diagnostic processes with respect to the sensors are executed by the DSP, the execution of error diagnosis by the DSP makes unnecessary the failure diagnoses of individual diagnosing functions themselves.

Other objects, features and advantages of the invention will become apparent from the following description of the embodiments of the invention taken in conjunction with the accompanying drawings.

### BRIEF DESCRIPTION OF THE DRAWINGS

Fig. 1 shows in block diagram a sensor control circuit as an embodiment of this invention;
Fig. 2 shows in block diagram a digital signal processor as an embodiment of this invention;
Fig. 3 is a flow chart for sensor diagnosis according to an embodiment of this invention;
Fig. 4 is a flow chart for DSP diagnosis according to an embodiment of this invention;
Fig. 5 shows in block diagram the mechanism of PROM diagnosis according to an embodiment of this invention;
Fig.6 shows in block diagram the mechanism of RAM diagnosis according to an embodiment of this invention;
Fig. 7 shows in block diagram a communication unit according to an embodiment of this invention;
Fig. 8 shows in block diagram an error code generation unit according to an embodiment of this invention;
Fig. 9 is the timing chart illustrating the operation of the communication unit according to an embodiment of this invention;
Fig. 10 is the flow chart illustrating the process executed by the external device according to an embodiment of this invention.

### DESCRIPTION OF THE EMBODIMENTS

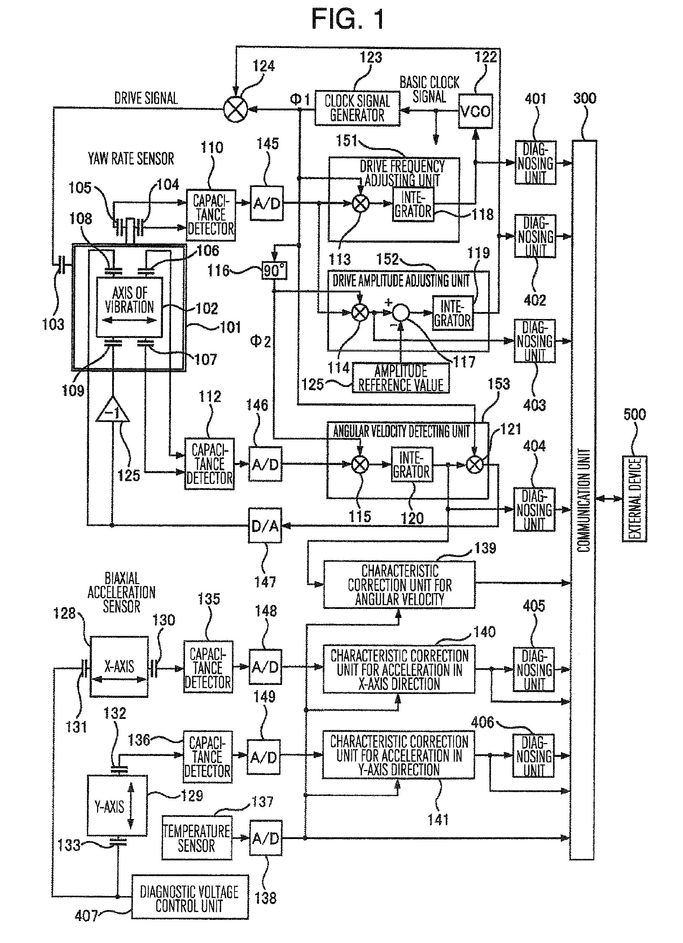

An embodiment of this invention will be described with reference to Figs. 1~9.

Fig. 1 shows in block diagram a control circuit for an angular velocity sensor (yaw rate sensor) and an acceleration sensor (biaxial acceleration sensor), as an embodiment of this invention. An angular velocity detection element 101 includes a vibrator 102 which has a predetermined mass and vibrates at a predetermined frequency f_{d} in the direction along the axis of vibration; a fixed electrode (external force application unit) 103 which generates electrostatic force for adjusting the amplitude of the vibration of the vibrator 102 along the axis of vibration and the vibrating frequency of the vibrator 102; electrodes 104 and 105 (displacement detection unit) for detecting the amplitude of the vibration of the vibrator 102 and the vibrating frequency of the vibrator 102 as changes in electrostatic capacitances; fixed electrodes 106 and 107 (displacement detection unit) for detecting as change in electrostatic capacitance the displacement of the vibrator 102 taking place in the direction perpendicular to the axis of vibration due to the Coriolis force generated under the influence of angular velocity; and fixed electrodes 108 and 109 (servo voltage application unit) for exerting electrostatic force to the vibrator 102 so that the Coriolis force exerted on the vibrator 102 may be canceled.

The control circuit also includes a capacitance detector 110 for detecting the displacement of the angular velocity detection element 101 in the direction along the axis of vibration by detecting the difference between a first electrostatic capacitance and a second electrostatic capacitance, which are the electrostatic capacitances respectively between the angular velocity detection element 101 and the fixed electrode 104 and between the angular velocity detection element 101 and the fixed electrode 105; an A/D converter 145 for converting the output of the capacitance detector 110 to a corresponding digital signal; and a drive frequency adjusting unit 151 consisting of a multiplier 113 for performing synchronous detection by the help of a detection signal Φ 1 and an integrator 118 for adding up the output of the multiplier 113.

The control circuits further include a drive amplitude adjusting unit 152 having a multiplier 114 for performing synchronous detection by the help of a detection signal Φ2 generated by delaying the phase of the detection signal Φ1 by 90 degrees through a phase adjuster 116; a subtractor 117 for subtracting the output of a register 125 that delivers a preset reference amplitude value, from the output of the multiplier 114; and an integrator 118 for adding up the outputs of the multiplier 113 periodically.

The control circuit yet further includes a capacitance detector 112 for detecting the displacement of the vibrator 102 due to the Corioli force exerted on the vibrator 102, by detecting the difference between a first electrostatic capacitance and a second electrostatic capacitance, which are the electrostatic capacitances respectively between the vibrator 102 and the fixed electrode 106 and between the vibrator 102 and the fixed electrode 107; an A/D converter 146 for converting the output of the capacitance detector 112 to a corresponding digital signal; and an angular velocity detecting unit 153 consisting of a multiplier 115 for performing synchronous detection by the help of the detection signal Φ2, an integrator 120 for adding up the outputs of the multiplier 115 periodically, and a multiplier 121 for multiplying the output of the integrator 120 and the detection signal Φ2.

The control circuit still further includes a voltage-controlled oscillator (VOC) 122 for outputting the basic clock signal whose frequency depends on the output of the integrator 118; and a clock generating unit 123 for outputting the drive signal and the detection signal Φ1 I through the frequency division of the output of the VCO 122.

The control circuit furthermore includes a vibrator 128 displaced by the acceleration exerted thereon in the left-right direction (hereafter referred to as the X-axis direction) and a vibrator 129 displaced by the acceleration exerted in the forward-backward direction (hereafter referred to as the Y-axis direction); electrodes 130 and 132 for detecting the displacements of the vibrators 128 and 129 in the X- and Y-axis directions as changes in capacitances; electrodes 131 and 133 for forcibly displacing the vibrators in the X- and Y-axis directions by applying voltages to the electrodes 131 and 133, respectively; capacitance detectors 135 and 136 for detecting the changes in capacitances due to the displacement and for delivering the outputs corresponding to the changes in capacitances; A/D converters 148 and 149 for converting the outputs of the capacitance detectors 135 and 136 to corresponding digital signals; a temperature sensor 137 for detecting the ambient temperature, converting the detected temperature to a corresponding voltage, and outputting the voltage; and an A/D converter 138 for converting the outputted voltage to a corresponding digital signal.

The control circuit yet furthermore includes characteristic correction units 139, 140 and 141 for correcting the outputs of the angular velocity sensor (yaw rate sensor in Fig. 1) and the acceleration sensor (biaxial acceleration sensor in Fig. 1) in accordance with the output of the temperature sensor 137.

The control circuit yet furthermore includes a diagnosing unit 401 for checking whether or not the drive frequency is normal, on the basis of the output of the drive frequency adjusting unit 151; a diagnosing unit 402 for checking whether or not the driver amplitude is normal, on the basis of the output of the drive amplitude adjusting unit 152; a diagnosing unit 403 for checking whether or not the vibration of the vibrator in the direction along the axis of vibration is normal, on the basis of the output of the synchronous detection unit (i.e. multiplier) 114 in the drive amplitude adjusting unit 152; a diagnosing unit 404 for checking whether or not the angular velocity is normal, on the basis of the output of the angular velocity detecting unit 153; a diagnosing unit 405 for checking whether or not the function of detecting acceleration is normal, on the basis of the output of an X-axis acceleration characteristic correction unit 140; a diagnosing unit 406 for checking whether or not the function of detecting acceleration is normal, on the basis of the output of an Y-axis acceleration characteristic correction unit 141; and a diagnostic voltage control unit 407 for applying a fixed voltage to the electrodes 131 and 133 so as to displace the vibrator forcibly in the X- and Y- axis directions for the purpose of diagnosing the function of detecting acceleration.

The control circuit finally includes a communication unit 300 for transferring the sensor outputs to an external device 500.

Now the operation of this circuit will be described. In the drive frequency adjusting unit 151, the frequency of the drive signal is so adjusted that the vibration of the vibrator 151 in the direction along the axis of vibration can generate resonance. The displacement of the angular velocity detection element 101 caused by the drive signal is detected by means of the fixed electrodes 104 and 105, and then inputted to the capacitance detector 110. The displacement signal which is obtained through the capacitance detector 110 and the A/D converter 145 and represents the displacement of the vibrator 102, is applied to the synchronous detection unit 113 (i.e. multiplier 113) to be subjected to synchronous detection. As a result, the displacement of the vibrator 102 in the direction along the axis of vibration is detected. Then, the integrator 118 integrates the signal outputted from the synchronous detection unit 113.

In the drive amplitude adjusting unit 152, the amplitude of the drive signal is so adjusted that the amplitude of the vibration of the vibrator 102 in the direction along the axis of vibration is equal to the value supplied as the output of the reference amplitude value register 125.

The displacement signal which is obtained through the A/D converter 145 and represents the displacement of the vibrator 102, is applied to the synchronous detection unit 114 (i.e. multiplier 114) to be subjected to synchronous detection. As a result, the displacement of the vibrator 102 in the direction along the axis of vibration is detected. Then, the difference of the output of the synchronous detector 114 from the referenced value is obtained by the subtracter 117, and the obtained difference is integrated by the integrator 119. If the output of the synchronous detector 114 coincides with the amplitude reference value, the difference mentioned above vanishes. Accordingly, the output of the integrator 119 converges to a constant value. The output of the integrator 119 is received by the multiplier 124, which multiplies the output of the frequency divider 123 (i.e. clock generating unit 123) and the output of the drive amplitude adjusting unit 152 to generate the drive signal.

In the angular velocity detecting unit 153, the displacement of the vibrator 102 due to the Coriolis force is detected by the fixed electrodes 106 and 107 and the capacitance detector 112. And an operation is performed in such a matter that the displacement of the vibrator 102 due to the Coriolis force is canceled by the electrostatic force generated between the vibrator and the electrodes by applying a voltage between the fixed electrodes 108 and 109. In other words, servo control is performed in such a manner that such a voltage is fed back to the sensor as reduces to zero the displacement of the vibrator 102 due to the Coriolis force generated in the direction perpendicular to the axis of vibration. And then the amplitude of the obtained fed-back voltage is outputted as the signal representing the then detected angular velocity. To be precise, the signal representing the displacement of the vibrator obtained through the capacitance detector 112 and the A/D converter 146 is subjected to synchronous detection in the synchronous detection unit 115 (i.e. multiplier 115) so that the displacement due to the vibration in the direction perpendicular to the axis of vibration can be obtained. Then, the integrator 120 integrates the signal obtained by the synchronous detector 115, and the output of the integrator 120 is multiplied by Φ1 in the multiplier 121 to generate a feedback signal corresponding to the displacement caused by the vibration due to the angular velocity in the direction perpendicular to the axis of vibration. Further, the displacement due to the vibration perpendicular to the axis of vibration is canceled by applying a voltage, that is the output of the D/A converter 147, to the fixed electrode 108 and another voltage, that is the polarity-inverted version of the output of the D/A converter 147, to the electrode 109. The output of the integrator 120 delivered while that vibration is being canceled, is regarded as the signal representing the angular velocity.

The operation of the acceleration sensor (biaxial acceleration sensor in Fig. 1) will now be described. When the vibrator 128 is displaced by the acceleration exerted in the direction of the X-axis, the fixed electrode 130 undergoes the change in electrostatic capacitance corresponding to the displacement. The capacitance detector 135 detects the change in capacitance and the output of the capacitance detector 135 is fed to the A/D converter 148. The output of the A/D converter 148 serves as a signal representing the acceleration corresponding to the displacement of the vibrator 128. A similar description applies to the vibrator 129 and its associated system for detecting the acceleration in the direction of the Y- axis.

The characteristic correction units 139, 140 and 141 perform temperature correction operation on the angular velocity outputted from the angular velocity detecting unit 153 and high frequency noise component elimination operations using low-pass filters on the accelerations outputted from the biaxial acceleration sensor.

As for the diagnosing unit 401 - 406, the diagnoses of drive function and angular velocity detection function are executed with respect to angular velocity detection. With respect to the acceleration sensor (i.e. biaxial acceleration sensor), a diagnostic voltage is applied to the fixed electrodes 131 and 133 of the vibrators 128 and 129 from the diagnostic voltage control unit 407 so that the vibrators 128 and 129 are forcibly displaced to diagnose whether they operate normally or not.

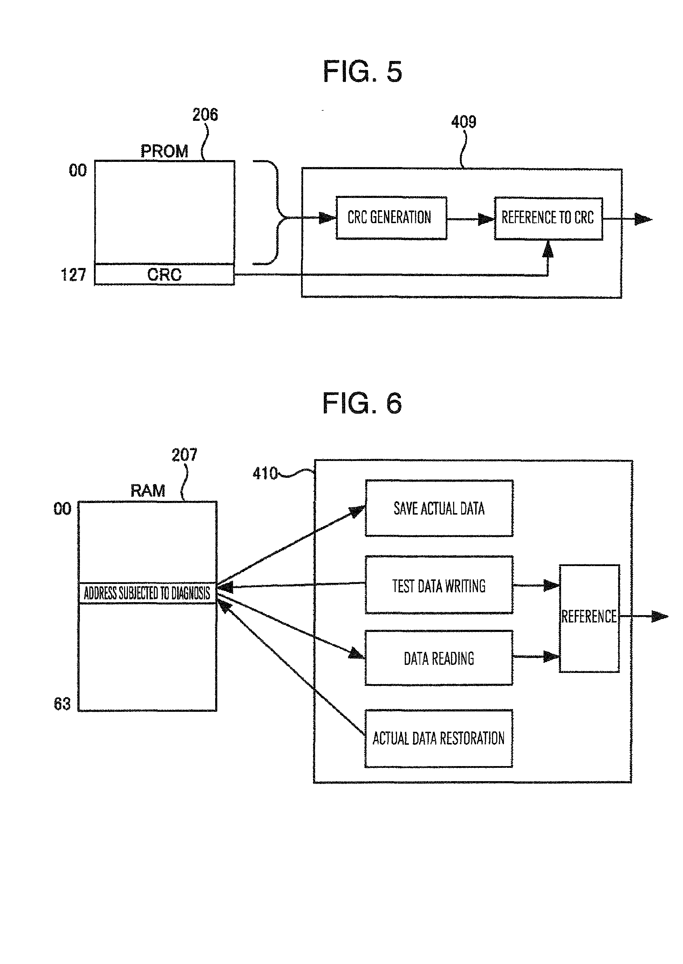

The communication unit 300 transmits the three characteristic-corrected sensor outputs and the associated diagnostic information to the external device 500. The detail of this part will be described later with reference to Figs. 6 ~ 8.

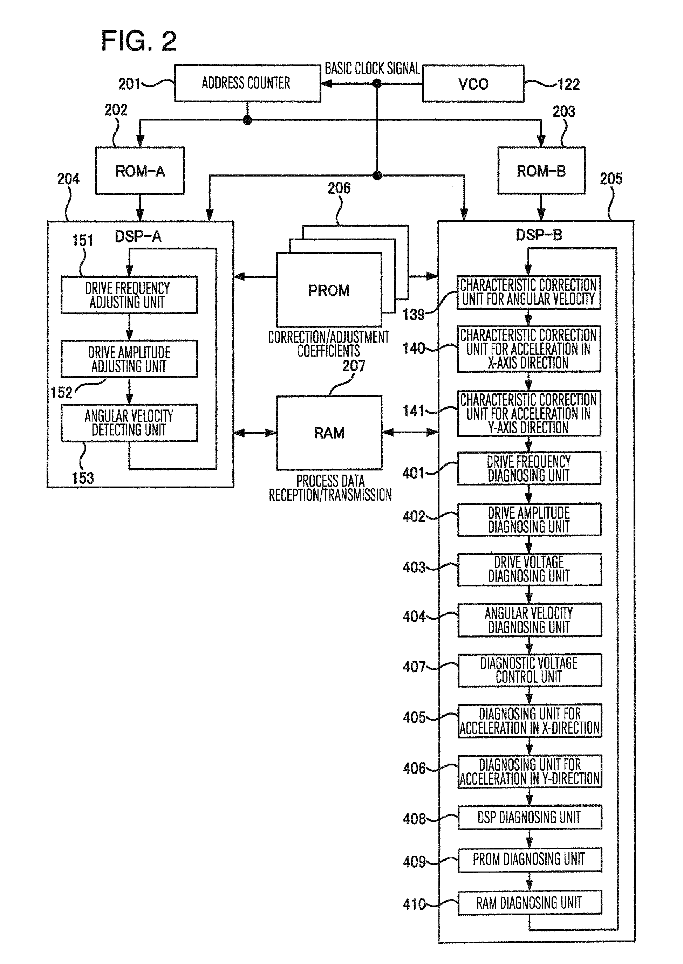

Fig. 2 shows in block diagram the configuration of a circuit for realizing acceleration sensor control according to an embodiment of this invention. The sensor control of this embodiment is realized with two digital signal processors (DSPs) 204 and 205 and control programs stored in two read-only memories 202 and 203. The VCO 122, as shown in Fig. 1, is a unit for generating a clock signal whose frequency is in synchronism with the resonance frequency of the vibration of the angular velocity detection element 101 in the first direction. An address counter 201 simply performs counting up the clock pulses of the basic clock signal outputted from the VCO 122.

The DSP-A 204 executes the functions of the drive frequency adjusting unit 151, the drive amplitude adjusting unit 152 and the angular velocity detecting unit 153, all shown in Fig. 1. The DSP-B 205 executes the functions of the characteristic correction units 139, 140 and 141 for angular velocity, X-direction acceleration and Y-direction acceleration, all shown in Fig. 1; the diagnosing units 401 - 406; and the diagnostic voltage control unit 407. Further, the DSP-B 205 executes the functions of a DSP diagnosing unit 408 for diagnosing the arithmetic functions of the DSPs; a PROM diagnosing unit 409 for diagnosing the PROMs that contain therein the coefficients for correction and adjustment; and a RAM diagnosing unit 410 for the reception/transmission of data to be processed in the two DSPs and for holding arithmetic data temporarily. PROM 206 is a memory for containing coefficients for integration and corrective calculation of characteristics. In this embodiment, three PROMs storing the same data constitute the PROM 206, and reliability against memory failure is secured by adopting the "majority-decision" of their outputs as the output of the PROM 206. RAM 207 serves as a buffer for transferring the result of calculation by the DSP-A to the DSP-B and also for temporarily storing data while the two DSPs are carrying out calculations.

Now, the operation of the circuit shown in Fig. 2 will be described. The two DSPs, DSP-A and DSP-B, operate in response to the basic clock signal outputted from the VCO 122. DSP-A 204 repeatedly performs the functions of the drive frequency control, the drive amplitude control and the angular velocity detection control in the form of programs, which are stored in the addresses "0" through the "final address" (e.g. address "255") of ROM-A 202, at a time interval, the period of repetition being equal to the reciprocal of, for example, four times the resonance frequency. Also, DSP-A 205 repeatedly performs the functions of the angular velocity/acceleration characteristic corrections and the diagnosing processes in the form of programs, which are stored in the addresses "0" through the "final address" (e.g. address "4095") of ROM-B 203, at a time interval, the period of repetition being equal to the reciprocal of, for example, 1/4 times the resonance frequency. Accordingly, while the DSP-B 205 completes one cycle of process, the DSP-A 204 completes 16 cycles of process. The control programs installed in the two ROMs 202 and 203 do not have jumps between effective addresses due to condition judgment and routine calls, but are simply executed by following the first address through the last address repeatedly. According to this design, therefore, even if one cycle of process fails due to, for example, noise, the normal process is easily resumed. As a result, suppose that process is initiated at an arbitrary address after the turn-on of power, then the result of process for at most one period, i.e. cycle, may be indefinite. But since the next period of process starts at address "0", the function of resetting the address counter 201 at the time of power turn-on can be dispensed with.

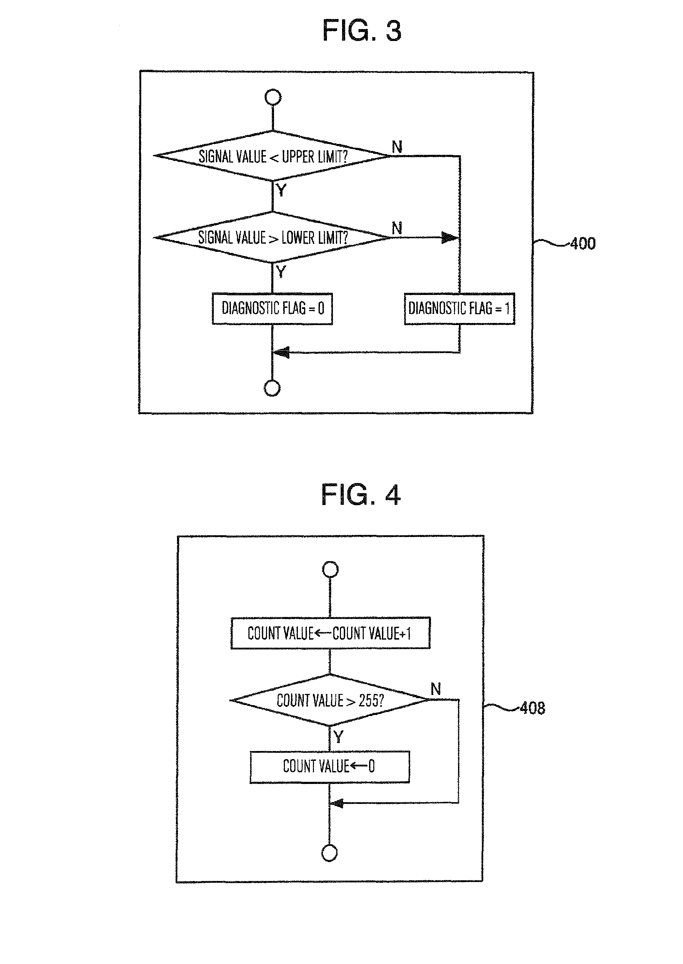

Next, description is made of diagnosing functions. The detailed operations of the diagnosing units 401 through 406 will be described with reference to a representative diagnosing unit 400 shown in Fig. 3. An upper limit (value) and a lower limit (value) are previously selected so as to determine the validity of some signal values. If a signal value is between the upper and lower limits, the signal value is judged to be "normal" and diagnostic flag "0"is outputted. If otherwise, the signal value is judged to be "abnormal" and diagnostic flag "1" is outputted. The diagnosing units 401 through 406 respectively have different upper and lower limits for executing the functions of diagnosing as in the unit 400.

The operation of the DSP diagnosing unit 408 will be described with reference to Fig. 4. The DSP diagnosing unit 408 has an 8-bit counter, and the content of the counter increments by one each time a cycle of process consisting of the functions of the characteristic correction units 139 ~ 141 has been completed. Since the counter is of 8-bit structure, when the count exceeds 255, it returns to 0. Thus, by counting up from 0 to 255, the adding function, the judging function, the resetting function, etc. of the DSP can be diagnosed.

The operation of the PROM diagnosing unit 409 will be described with reference to Fig. 5. Data at respective addresses in the PROM 206 are successively read to generate CRC codes. Then, the function of reading the data in the PROM is diagnosed by referring the generated CRC codes to the expected values of the previously stored CRC codes. If the generated CRC codes do not coincide with the expected value, a diagnosed error-flag is raised.

The operation of the RAM diagnosing unit 410 will next be described with reference to Fig. 6. Preset piece of data is written in and then read out of, each address in the RAM 207. The diagnosis of the read/write function of the RAM 207 is performed by checking whether the read data coincides with the written data. At the same time, the DSP's function of carrying out calculations (addition, subtraction) is also diagnosed. In other words, the data stored in address "0" in the RAM 207, which is first to be diagnosed, is read out and temporarily written in the temporary save area (e.g. cache memory of the DSP). Then, a diagnosing pattern is written in the address "0" and then read out of the same address. After this, the data stored in the temporary save area is returned to the address "0" in the RAM 207. Now, the difference such as (written value)-(read value) is calculated. If the difference becomes equal to zero, the error-flag of "0" is raised, but if otherwise, the error-flag of "1" is raised. This process is performed on the addresses "0" through "70" in the RAM 207.

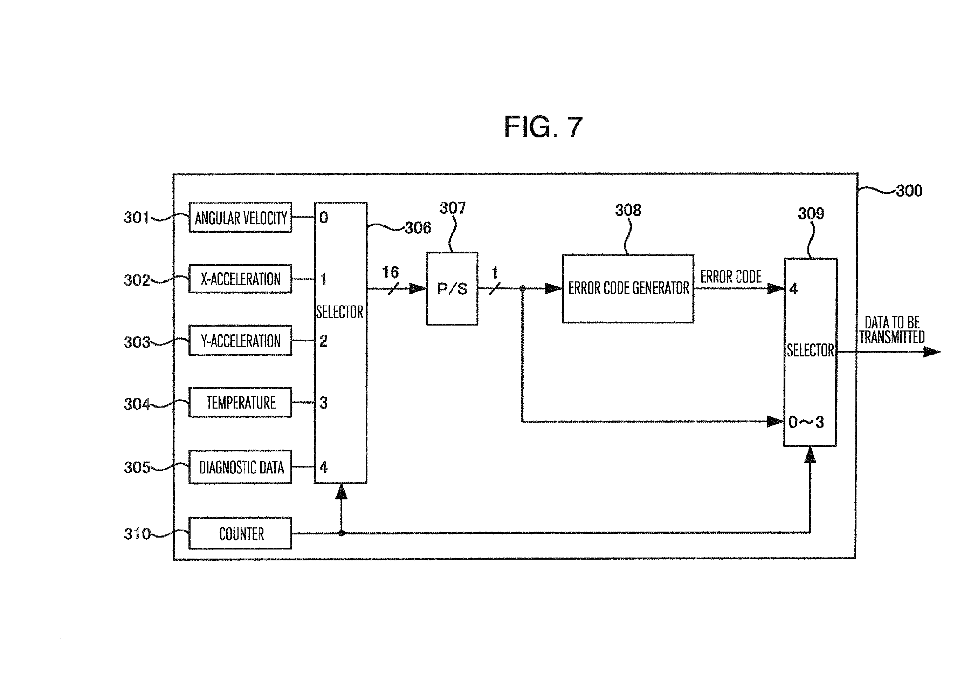

Fig. 7 shows in flow diagram the process performed by the communication unit 300. As shown in Fig. 7, registers 301 through 304 store the four outputs from the characteristic correction units 139 through 141 and the temperature sensor 137. A resistor 305 stores the diagnostic outputs from the diagnosing units 401 through 407, the DSP diagnosing unit 408, the PROM diagnosing unit 409 and the RAM diagnosing unit 410. A counter 310 counts up by unity each time it has received 16 transfer clocks, and has the function of repeatedly outputting the values from 1 through 4. A selector 306 has the function of selectively outputting one of the outputs from the five registers 301 through 305.

A parallel/serial converter 307 has the function of converting the 16-bit parallel output of the selector 306 to a serial digital signal. An error code generator 308 has the function of generating a code for detecting communication errors due to the noise existing on the communication channel between transmission and reception sides with respect to four pieces of data to be transmitted. A selector 309 has the function of selecting the output of the error code generator 308 if the output of the counter 310 is "4", and selecting the data on the sensor outputs and the diagnostic results, if otherwise.

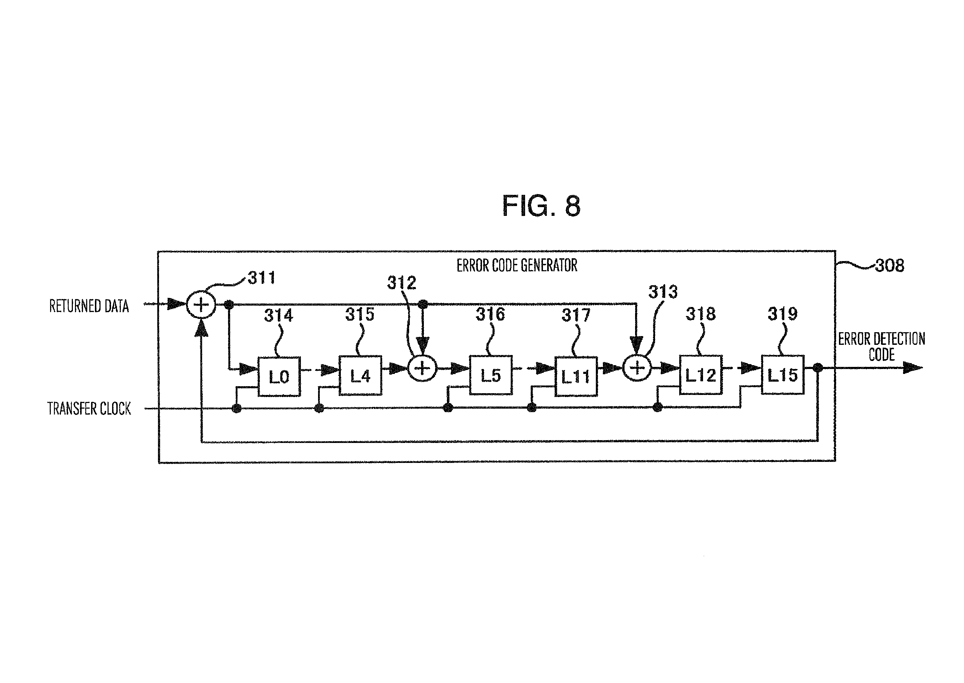

Fig. 8 shows in block diagram the circuit configuration of an error code generator as an embodiment of this invention, having the function of generating an error detection code of cyclic redundancy check (CRC) system. Each of adders 311, 312 and 313 has the function of receiving two inputs. Each of latches 314 through 319 has the function of holding input data in response to the leading edge of the transfer clock pulse. Although some latches are omitted for simplicity in Fig. 8, the error code generator 308 is a bit shift circuit that actually includes 16 latches L0 through L15. The error code generator 308 operates in such a manner that when the 5 parallel data each consisting of 16 bits (i.e. total of 80 bits), stored in the registers 301 through 305 shown in Fig. 7, are inputted bit by bit in response to the transfer clock pulses, a single error detection code is outputted bit by bit.

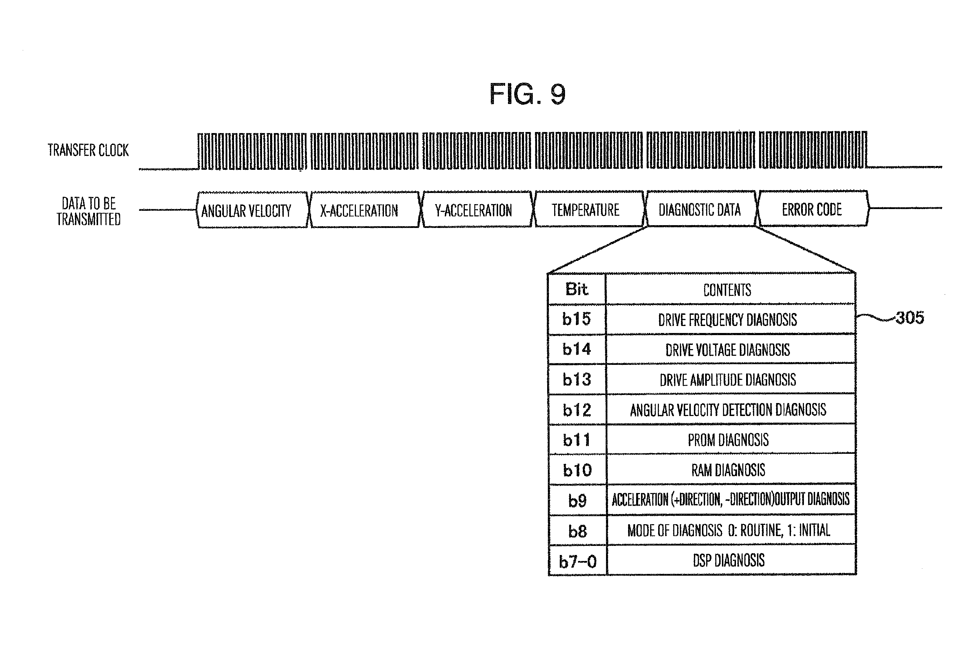

The operation of this circuit will now be described. Fig. 9 is a timing chart for the signal communication taking place in this embodiment. When the transfer clock pulses are received from the external device 500 shown in Fig. 1, the sensor output data stored in the registers 301 through 304 are outputted bit by bit sequentially until the 64th transfer clock pulse has been received. The diagnostic data stored in the register 305 are outputted bit by bit sequentially in response to the 65th through 80th transfer clock pulses. As shown as the diagnostic information in the register 305 in Fig. 9, diagnostic results are assigned for respective bits. If the diagnostic result in each bit is normal, the bit is "0" whereas it is abnormal, the bit is "1". In response to the 81st through 96th transfer clock pulses, error detection codes with respect to the 5 pieces of data are outputted. By using the 6th error detection code, the external device 500 checks whether or not there exist errors on the communication channel with respect to the 5 pieces of data. If there is an error, the transfer clock pulses are received again so that the communication of the data is executed again.

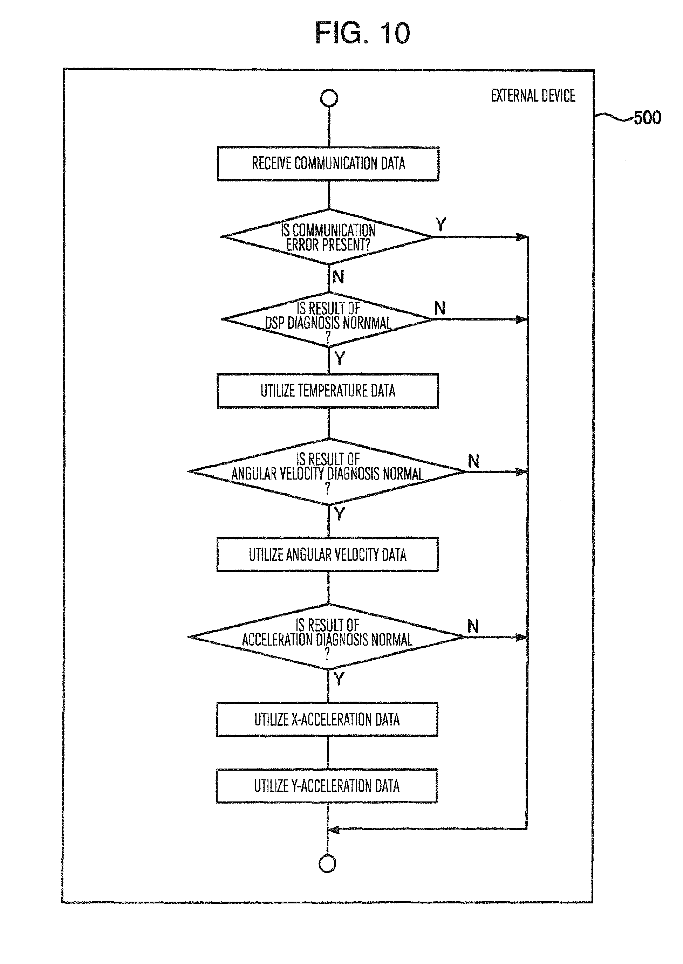

Fig. 10 is a flow chart showing an example of process to be executed after the external device 500 has received a whole set of data from the apparatus for detecting angular velocity and acceleration according to this invention. First, on the basis of the error code that is the 6th data shown in Fig. 9, the external device 500 checks whether or not there exist errors in the previously received 5 pieces of data due to the signal fluctuations or noise on the communication channel. If there is any error at all, all the previously received 5 pieces of data are regarded as invalid and discarded. If there is no error, they are regarded as valid and utilized. Then, in the diagnostic data, that is the fifth data shown in Fig. 9, DSP diagnosing data, PROM diagnosing data and RAM diagnosing data are checked for validity, and if the results of diagnoses are abnormal, the previously received four pieces of sensor data are regarded as invalid and discarded. If the results of diagnoses are normal, the temperature data is regarded as valid and utilized. Secondly, in the diagnostic data, that is the fifth data shown in Fig. 9, the data on the drive and detection functions for angular velocity are checked for validity. And if the result of diagnosis is abnormal, the data from the angular velocity sensor is regarded as invalid and discarded. If, on the other hand, the result of diagnosis is normal, the angular velocity sensor data is regarded as valid and utilized. Finally, in the diagnostic data, that is the fifth data shown in Fig. 9, the diagnosing data on acceleration is checked for validity, and if the diagnostic result is abnormal, the secondly and thirdly received data from the acceleration sensor are regarded as invalid and discarded. If the diagnostic result is normal, those data from the acceleration sensor is regarded as valid and utilized.

It should be further understood by those skilled in the art that although the foregoing description has been made on embodiments of the invention, the invention is not limited thereto and various changes and modifications may be made without departing from the spirit of the invention and the scope of the appended claims.

## Claims

1. An apparatus for detecting angular velocity and acceleration, comprising:
a vibrator unit (102) which vibrates in first and second directions perpendicular to each other;
means for detecting a displacement amount of the vibrator unit (102) as the angular velocity when the vibrator unit (102) is displaced in the second direction due to generation of an angular velocity while the vibrator unit (102) is vibrated in the first direction;
means, when vibrator units (128, 129) are displaced in first and second directions due to generation of an acceleration, for detecting displacement amounts in the first and second directions of the vibrator units (128, 129) as accelerations in the first and second directions; and
means for diagnosing (401-406) functions of the means for detecting the angular velocity and the means for detecting the accelerations, wherein
said apparatus outputs a sensor signal including the detected angular velocity and the detected acceleration, and a result of diagnosis together to an external device (500) in response to a single communication demand from the external device (500).

2. The apparatus for detecting angular velocity and acceleration according to claim 1, wherein
the result of diagnosis outputted to the external device (500) includes information about results of the diagnoses of a drive function of an angular velocity sensor, a detection function of the angular velocity sensor, a detection functions of an acceleration sensor, an operation of a microprocessor or digital signal processors (204, 205), ROMs (202, 203), and a RAM (207).

3. The apparatus for detecting angular velocity and acceleration according to claim 1, wherein the sensor signal outputted to the external device (500) includes the detected angular velocity, the detected accelerations, and the detected temperature.

4. An apparatus for detecting angular velocity and acceleration, comprising
a vibrator unit (102) which vibrates in first and second directions perpendicular to each other, wherein
a displacement amount of the vibrator unit (102) is detected as the angular velocity when the vibrator unit is displaced in the second direction due to a generation of an angular velocity while the vibrator unit (102) is vibrated in the first direction, and displacement amounts of vibrator units (128, 129) in first and the second directions are detected as accelerations,
an external device (500) receives a results of diagnosis and a sensor signal including the detected angular velocity and the detected accelerations all together, and judges whether or not the sensor signal is valid based on the result of diagnosis.

5. An apparatus for detecting angular velocity and acceleration, comprising
a vibrator unit (102) which vibrates in first and second directions perpendicular to each other, wherein
a displacement amount of the vibrator unit is detected as the angular velocity when the vibrator unit (102) is displaced in the second direction due to a generation of an angular velocity while the vibrator unit (102) is vibrated in the first direction, and displacement amounts of vibrator units (128, 129) in first and the second directions are detected as accelerations,
the apparatus further comprises:
a unit for converting the detected angular velocity and the detected acceleration to digital signals: and
a unit for executing the self-diagnoses of the apparatus for detecting angular velocity and acceleration through digital signal processing.

6. The apparatus for detecting angular velocity and acceleration according to claim 5, wherein the unit for executing the self-diagnosis of the apparatus for detecting angular velocity and acceleration through digital signal processing is a microprocessor or a digital signal processor.

7. The apparatus for detecting angular velocity and acceleration according to claim 5, wherein the self-diagnoses of the apparatus include the diagnoses of a drive function and a detecting function of an angular acceleration sensor, a detecting function of an acceleration sensor, an arithmetic function of a micro processor or a digital signal processor, a data saving function of a ROM (202, 203) and a data read/write function of a RAM (207).

8. An apparatus for detecting angular velocity and acceleration, comprising
a vibrator unit (102) which vibrates in first and second directions perpendicular to each other, wherein
a displacement amount of the vibrator unit is detected as the angular velocity when the vibrator unit (102) is displaced in the second direction due to a generation of an angular velocity while the vibrator unit (102) is vibrated in the first direction, and displacement amounts of vibrator units (128,129) in first and the second directions are detected as accelerations, and
the apparatus further comprises a multiple ROM configuration; and a self-diagnoses function, the self-diagnoses function including the diagnoses of a drive function of an angular velocity sensor, a detecting function of the angular velocity sensor, a detecting function of the acceleration sensor, an arithmetic function of a micro processor or a digital signal processor, a data saving function of a ROM (202, 203) and a data read/write functions of a RAM (207).

9. An apparatus for detecting angular velocity and acceleration, comprising:
an angular velocity sensor unit which has a vibrator (102) capable of displacing in first and second directions perpendicular to each other, and detects the angular velocity by vibrating the vibrator (102) in the first direction;
an acceleration sensor unit (128, 129) which detects displacements in the first and second directions as accelerations;
ROMs (202, 203) having a multiple configuration and storing coefficients therein;
a RAM (207) for temporarily storing data; and
a micro processor or a digital signal processor which uses the coefficients read out of the ROMs (202, 203) to store data in the RAM (207), and corrects the vibration of the vibrator, signals from the angular velocity sensor unit and the acceleration sensor unit,
wherein the apparatus further comprises a diagnosing unit for diagnosing a drive function of the angular velocity sensor unit, a detecting function of the angular velocity sensor unit, a detecting function of the acceleration sensor unit, an arithmetic function of the micro processor or the digital signal processor, and a data read/write function of a RAM (207).
